# EUROPEAN PATENT APPLICATION

(11) **EP 4 507 276 A1**
(43) Date of publication of application: **12.02.2025**
(21) Application number: 23784346.1
(22) Date of filing: 07.04.2023
(51) Int. Cl.: H04L 67/104

(54) **BLOCKCHAIN CONSENSUS METHOD AND BLOCKCHAIN COPY DEVICE**

(30) Priority: 08.04.2022 CN 202210366175
(71) Applicant: Tsinghua University, Beijing 100084 (CN); Digital Currency Institute, The People's Bank of China, Beijing 100071 (CN)
(72) Inventor: DUAN, Sisi, Beijing 100084 (CN); WANG, Xiaoyun, Beijing 100084 (CN); MU, Changchun, Beijing 100084 (CN); DI, Gang, Beijing 100084 (CN)
(74) Representative: Boult Wade Tennant LLP
(86) International application number: PCT/CN2023/086807
(87) International publication number: WO 2023/193783

(57) **Abstract**

The present disclosure discloses a blockchain consensus method and a blockchain replica apparatus, and provides a cBFT protocol with a plurality of different voting thresholds, which may reduce a communication complexity of the protocol, reduce a consensus agreement time, improve a throughput of a consensus system, and simultaneously reduce sensitivity of the protocol to a timer.

## Description

### RELATED APPLICATION

The present disclosure claims priority to Chinese Patent Application NO. 202210366175.9, entitled "BLOCKCHAIN CONSENSUS METHOD AND BLOCKCHAIN REPLICA APPARATUS" and filed on April 08, 2022, which is hereby incorporated by reference in its entirety.

### TECHNICAL FIELD

The present disclosure relates to the technical field of blockchain, in particular to a blockchain consensus method and a blockchain replica apparatus.

### BACKGROUND

This part is intended to provide background or context for the embodiments of the present disclosure as stated in the claims. Descriptions here are not recognized as prior arts by virtue of their inclusion in this part.

Consensus problem is one of the most basic problems in fault tolerant distributed computing. Realization of consensus enables all processes in a distributed system to agree on a common value. Byzantine Fault Tolerance (BFT) consensus problem was formally raised in the background of a Byzantine fault, and is widely applied in distributed systems after decades of research in academia and industry.

A classic BFT State Machine Replication (SMR) protocol depends on a stable leader to implement and drive the protocol until a view changes. In each view, the leader collects user instructions and packages them, prepares a block and broadcasts it. After receiving the block broadcasted by the leader, each replica votes after judging validity of the block.

With the rise of the blockchain technology in recent years, the BFT protocol is considered to be a standard model of a blockchain with access requirements. Many BFT-oriented researchers are exploring an alternative method, called chain-type BFT or cBFT (Concurrent Byzantine Fault Tolerance), by combining with decades of research on the BTF with the state-of-the-art blockchain research, it is considered to be a new generation of BFT applicable to blockchains.

A cBFT protocol is divided into a plurality of views when it is running, and in each view, its leader is designated via a leader election agreement which is formulated in advance. Being different from a classic BFT protocols (such as PBFT (Practical Byzantine Fault Tolerance)), the cBFT protocol uses a chain-type structure, blocks are connected together using a cryptographic technique (hash algorithm), and single-stage proposal voting is supported, a vote on one block also votes on a previous block in the same branch. cBFT has strong extendibility and deployable.

Assuming that a system includes n replicas, f of which have a Byzantine fault, and n = 3f + 1. In all existing cBFT protocols, no matter how many rounds of voting are required to agree on a consensus, for a certain block, a leader needs to collect 2f + 1 votes from different replicas to form a certificate for the block. When a network is in good condition, the leader can quickly collect votes of more than 2f + 1 replicas, even collects votes from all replicas, only using a voting result of 2f + 1 replicas will increase the complexity of agreeing on a consensus, and will further produce a long time delay; and when the network is in poor condition or a timer is not set properly in a system, it may be difficult for the leader to collect votes of 2f + 1 replicas, resulting in an extended consensus time and a low throughput of a consensus system.

### SUMMARY

The embodiments of the present disclosure provide a blockchain consensus method, and provide a plurality of cBFT protocol with different voting thresholds, which reduces a communication complexity of the protocol, reduces time to agree on a consensus, and improves a throughput of a consensus system. The method includes:
receiving a block message broadcasted by a leader, and the block message is packaged by the leader based on a preset message structure after receiving a user instruction, and the block message includes a first voting result on a new block prepared by the leader in response to the user instruction and a first voting result of parent block of the new block, and the new block is packaged by the leader based on a preset block structure, the new block includes a parent block voting result type of the new block, and the voting result type includes f + 1, 2f + 1, and 3f + 1;
determining validity of the new block based on a local variable currently saved and a preset voting rule, transmitting a second vote of the new block to the leader when it is determined that the new block is valid, and simultaneously updating the local variable based on the block message, and the local variable includes a latest voting block of blocks, a latest voting evidence and a latest weak voting evidence, and updating the latest voting block of blocks to a new block included in the block message; when the first voting result includes votes of 2f + 1 replicas or 3f + 1 replicas, updating the latest vote evidence to the first voting result; when the first voting result includes votes of f + 1 replicas, updating the latest weak voting evidence to the first voting result; and collecting, by the leader, the second vote of the new block as transmitted by each replica, and taking all second votes obtained by collecting as the first voting result included in a block message of a next new block in which a current block is a parent block;
determining a consensus rule based on the first voting result and a pre- designated consensus protocol type;
tracing voting results of a designated number of parent blocks of the new block based on the consensus rule, and if the voting results of the designated number of parent blocks meet the consensus rule, determining that an earliest prepared parent block in the designated number of parent blocks agrees on a consensus, executing a block commit protocol, and adding the earliest prepared parent block and a block that is on the same branched chain as the earliest prepared parent block and is earlier than the earliest prepared parent block into a blockchain.

The embodiments of the present disclosure further provide a blockchain replica apparatus, and provide a plurality of cBFT protocol with different voting thresholds, which reduces a communication complexity of the protocol, reduces time to agree on a consensus, and improves a throughput of a consensus system. The apparatus includes:
a communication module, configured to receive a block message broadcasted by a leader, and the block message is packaged by the leader based on a preset message structure after receiving a user instruction, and the block message includes a new block prepared by the leader in response to the user instruction and a first voting result of a parent block of the new block, and the new block is packaged by the leader based on a preset block structure, the new block includes a parent block voting result type of the new block, and the voting result type includes f + 1, 2f + 1, and 3f + 1;
a process module, configured to determine validity of the new block based on a local variable currently saved and a preset voting rule, transmit a second vote of the new block to the leader when it is determined that the new block is valid, and simultaneously update the local variable based on the block message, and the local variable includes a latest voting block of blocks, a latest voting evidence and a latest weak voting evidence, and update the latest voting block of blocks to a new block included in the block message; when the first voting result includes votes of 2f + 1 replicas or 3f + 1 replicas, update the latest vote evidence to the first voting result; when the first voting result includes votes of f + 1 replicas, update the latest weak voting evidence to the first voting result; and collect, by the leader, the second vote of the new block as transmitted by each replica, and take all second votes obtained by collecting as the first voting result included in a block message of a next new block in which a current block is a parent block;
a determination module, configured to determine a consensus rule based on the first voting result and a pre-designated consensus protocol type;
a consensus module, configured to trace voting results of a designated number of parent blocks for the new block based on the consensus rule, and if the voting results of the designated number of parent blocks meet the consensus rule, determine that an earliest prepared parent block in the designated number of parent blocks agrees on a consensus, execute a block commit protocol, and add the earliest prepared parent block and a block that is on the same branched chain as the earliest prepared parent block and is earlier than the earliest prepared parent block into a blockchain.

The embodiments of the present disclosure further provide a computer device, including a memory, a processor and a computer program that is stored on the memory and capable of running on the processor, the processor implements the above blockchain consensus method when executing the computer program.

The embodiments of the present disclosure further provide a computer readable storage medium storing a computer program that implements the above blockchain consensus method when being executed by a processor.

The embodiments of the present disclosure further provide a computer program product including a computer program that implements the above blockchain consensus method when being executed by a processor.

In the embodiments of the present disclosure, when receiving a user instruction, a **leader** packages a new block and a block message based on a preset block structure and a preset message structure and broadcasts them to a whole network; after a replica receives the block message, the validity of the new block is determined based on a local variable currently saved and a preset voting rule, and when the new block is determined to be valid, a second vote is transmitted to the leader, so that when the leader packages a block message of a next new block, all the collected second votes as a first voting result are written into a block message of the next new block; and, the replica is capable of obtaining a first voting result of a parent block of the new block from the block message, the first voting result may be voting results of f + 1 replicas, voting results of 2f + 1 replicas or voting results of 3f + 1 replicas. After that, a consensus rule is determined based on a pre-designated consensus protocol type and the first voting result; voting results of different designated numbers of parent blocks of new blocks are traced based on different consensus rules, and when the voting results of the designated number of parent blocks meet the consensus rule, it is determined that an earliest prepared parent block in the designated number of parent blocks agrees on a consensus, a block commit protocol is executed, and the earliest prepared parent block and a block that is on the same branched chain as the earliest prepared parent block and is earlier than the earliest prepared parent block are added into a blockchain. As such, compared with the existing cBFT consensus technology in which only 2f + 1 voting results are supported, types of supported voting results are expanded in the embodiments of the present disclosure, and a leader is capable of preparing a new block when receiving voting results of f + 1 replicas, 2f + 1 replicas and 3f + 1 replicas for a parent block of a new block. In a case where a network environment is poor and there are more new messages, leading to too high block packaging frequency, or improper setting of a system timer makes it difficult for a leader to collect 2f + 1 votes within a timed duration, as long as a parent block receives votes of f + 1 replicas, the leader is capable of preparing a new block, which ensures consensus to be carried out continuously, improves a throughput of a consensus system and simultaneously reduces the sensitivity of a protocol to a timer. When a network condition is better, a new block can be prepared after collecting voting results of 3f + 1 replicas for the parent block. Since a blockchain includes 3f + 1 replicas in total, when votes of 3f + 1 replicas are received, it shows that the parent block has been validity recognized by all replicas, and a consensus has been agreed, there is no need to conduct other rounds of consensus authentication, which shortens the time to consensus, greatly reduces communication complexity and time delay of consensus agreement and simultaneously also improves the throughput of the consensus system.

### BRIEF DESCRIPTION OF THE DRAWINGS

In order to describe technical solutions in the embodiments of the present disclosure or in a prior art more clearly, the drawings required for use in the embodiments or the prior art are briefly introduced below. Obviously, the drawings in the following description are only some embodiments of the present disclosure, other drawings may be obtained by those of ordinary skill in the art from these drawings without paying any creative labor. In the drawings:
FIG. 1 is a flow chart of a blockchain consensus method according to the embodiments of the present disclosure;
FIG. 2 is a schematic diagram of an f + 1 protocol using a first consensus rule for consensus according to the embodiments of the present disclosure;
FIG. 3 is a schematic diagram of a 3f + 1 protocol using a first consensus rule and a second consensus rule for consensus according to the embodiments of the present disclosure;
FIG. 4 is a schematic diagram of an f + 1/3f + 1 protocol using a second consensus rule for consensus according to the embodiments of the present disclosure;
FIG. 5 is a schematic diagram of an f + 1/3f + 1 protocol using a third consensus rule for consensus according to the embodiments of the present disclosure;
FIG. 6 is a schematic diagram of view changing according to the embodiments of the present disclosure;
FIG. 7 is a structural schematic diagram of a blockchain replica apparatus according to the embodiments of the present disclosure;
FIG. 8 is a structural schematic diagram of a computer device according to the embodiments of the present disclosure.

### DESCRIPTION OF THE EMBODIMENTS

In order to make the purposes, technical solutions and advantages of the embodiments of the present disclosure more clear, the embodiments of the present disclosure are further illustrated as follows in combination with the drawings. Here, the schematic embodiments of the present disclosure and their descriptions are used to illustrate the present disclosure, but are not intended to limit the present disclosure.

A BFT network model may be classified to a synchronous network, a semi-asynchronous network and an asynchronous network. The semi-asynchronous network has an unknown global stabilization time (GST), and after the GST a message transmitted between two correct replicas will arrive within a fixed delay. A semi-asynchronous BFT protocol ensures both the consistency of a system and the efficiency, under different network conditions. We take into account protocol design and optimization of a Byzantine fault tolerance protocol in a semi-asynchronous network environment (partial synchronous cBFT).

A BFT network model may be classified to a synchronous network, a semi-asynchronous network and an asynchronous network. The semi-asynchronous network has an unknown global stabilization time (GST), and after the GST a message transmitted between two correct replicas will arrive within a fixed delay. A semi-asynchronous BFT protocol ensures both the consistency of a system and the efficiency under different network conditions. In the embodiments of the present disclosure, protocol design and optimization of a Byzantine fault tolerance protocol in a semi-asynchronous network environment (partial synchronous cBFT) are considered.

On a blockchain structure, the embodiments of the present disclosure are configured with a chain data structure, i.e., each block has a hash of its parent block, points to its parent block, and when a block is prepared, a voting certificate (voting result) of its parent block needs to be included. Assuming that a system contains n replicas, f of which have a Byzantine fault, and n=3f + 1, the voting certificate includes votes of f + 1 replicas, votes of 2f + 1 replicas and votes of 3f + 1 replicas.

In the embodiments of the present disclosure, optimization is performed on the basis of the most well-known Hotstuff of the cBFT protocol at present, and a new protocol module is prepared. A variable threshold protocol is superimposed on the basis of Hotstuff and an original protocol is modified, to obtain a new chain BFT protocol supporting a variable threshold. The new BFT protocol uses a digital signature, communication complexity can also be reduced based on a threshold signature or an aggregate signature.

Generally speaking, the embodiments of the present disclosure improve a voting result of 2f + 1 replicas that is used in prior arts as a consensus threshold, and propose a consensus protocol when the number of votes collected is f + 1 or 3f + 1.

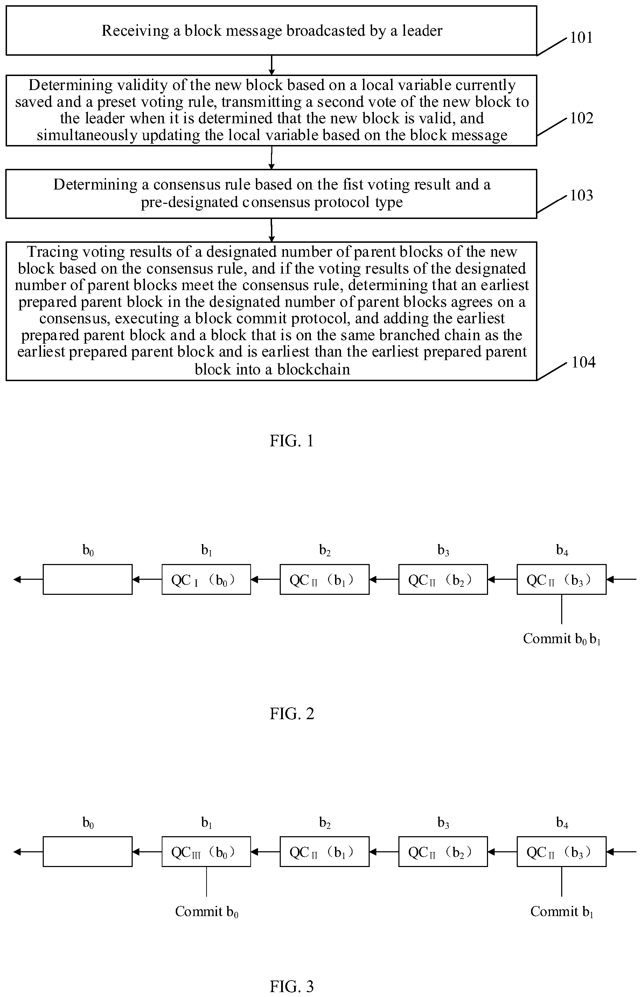

Based on the above general conception, the embodiments of the present disclosure provide a blockchain consensus method, which is applied to a replica in a blockchain, and the replica in the blockchain is also a blockchain node. As shown in FIG. 1, the method includes:
Step 101, receiving a block message broadcasted by a leader.

The block message is packaged by the leader based on a preset message structure after receiving a user instruction, including a new block prepared by the leader in response to the user instruction and a first voting result of a parent block of the new block, and the new block is packaged by the leader based on a preset block structure, including a parent block voting result type of the block, the voting result type including f + 1, 2f + 1, and 3f + 1.

Specifically, the preset block structure includes five elements, respectively being: a block type, a user request req, a parent block link pl (i.e., hash of a parent block of the block), a block height (height) and a block auxiliary data (aux). The block type includes four types, respectively being f + 1, 2f + 1, 3f + 1 and a first block prepared by a new leader after view changing.

In this embodiment, f + 1 block type, 2f + 1 block type and 3f + 1 block type are respectively a block carrying a voting result of f + 1 replicas in a block message, a block carrying a voting result of 2f + 1 replicas in a block message and a block carrying a voting result of 3f + 1 replicas in a block message.

The preset message structure includes a type domain for storing a message type, a block domain for storing a block, a justify domain for storing a parent block voting result of a block, and an aux domain for storing auxiliary data of a specific type block. In this embodiment, the message type includes a generic message. After view changing occurs, a first message transmitted by a leader of a new view is a special generic message, which may be called a view change message, and in other conditions, a message type of a block message is an ordinary generic message. The justify domain stores a voting result of a parent block of a block, the voting result is votes received from which replicas.

The specific type block is a block of the f + 1 block type, the aux domain is configured to store a first voting result of an auxiliary block of the block with the f + 1 block type; when the block is a block with other type other than the f + 1 block type, the aux domain is set to be null.

It should be noted that an auxiliary block of a block is a block that obtains votes of at least 2f + 1 (may be 2f + 1 or 3f + 1) one earlier than the block on a chain, based on a sequential order on the chain formed by the block in the form of a parent block link. By taking blocks with the f + 1 protocol as an example, a blockchain is formed by A, B, C, D and E in the form of parent block link from first to last, and A, B, C, D and E obtain votes of 2f + 1 replicas, votes of f + 1 replicas, votes of 2f + 1 replicas, votes of f + 1 replicas and votes of f + 1 replicas respectively. E is a new block received by a replica this time, the auxiliary block of the block E is block C (2f + 1 voting results of the block C are recorded in a block message of block D).

Step 102, determining validity of the new block based on a local variable currently saved and a preset voting rule, transmitting a second vote of the new block to the leader when it is determined that the new block is valid, and simultaneously updating the local variable based on the block message.

The second vote will be written into a next new block, for example, a new block received by a replica is block B, a parent block of the block B is block A, and block B is a parent block of block C, then block B carries a voting result of block A; and when it is determined that block B is valid, the replica transmits a second vote for block B to a leader. When proposing block C, the leader takes the second vote of all the replicas collected as a first voting result in the block message written into block C.

In this embodiment, the local variables includes a latest voting block of the blocks, a latest voting evidence and a latest weak voting evidence, the latest voting block of the blocks is updated to a new block included in the block message; when the first voting result includes votes of 2f + 1 or 3f + 1 replicas, the latest vote evidence is updated to the first voting result; when the first voting result includes votes of f + 1 replicas, the latest weak voting evidence is updated to the first voting result.

The number of voting replicas of f + 1 votes is smaller, efficacy of consensus is less, thus votes of f + 1 replicas are not taken as consensus evidence and are updated in the latest weak voting evidence; the number of voting replicas of 2f + 1 votes and 3f + 1 votes is larger, they have consensus efficacy, thus they are taken as consensus evidence and are updated in the latest voting evidence.

In another condition, when it is unable to determine that the new block is valid, the second vote is not transmitted to the leader, and the local variables are not updated based on the block message.

Step 103, determining a consensus rule based on the first voting result and a pre-designated consensus protocol type.

The consensus protocol type is previously designated, and after a consensus protocol type is designated, the consensus protocol type cannot be changed.

There are three consensus protocol types, respectively being an f + 1 protocol, a 3f + 1 protocol and a f + 1/3f + 1 protocol. Different consensus protocol types support different voting results, and when the voting results are different, consensus rule are different either.

Specifically, when a pre-designated consensus protocol type is an f + 1 protocol, voting results supported by the f + 1 protocol include voting results of f + 1 replicas and voting results of 2f + 1 replicas, that is, when the f + 1 protocol is adopted, a leader can prepare a new block when collecting validity votes of f + 1 replicas for parent block, and may also prepare a new block when collecting validity votes of 2f + 1 replicas for parent block. When the first voting result is voting results of f + 1 replicas, the number of f + 1 voting results is too small to be consensus evidence, thus if a block message of a new block includes voting results of f + 1 replicas, the consensus is not performed and a next block is continued to wait, whether the consensus can be performed is determined based on a voting result included in a next block message; and when the first voting result is voting results of 2f + 1 replicas, a first consensus rule is adopted.

When the pre-designated consensus protocol type is a 3f + 1 protocol, voting results supported by the 3f + 1 protocol includes voting results of 2f + 1 replicas and voting results of 3f + 1 replicas, i.e., a leader can prepare a new block when collecting validity voting results of 2f + 1 replicas or 3f + 1 replicas for parent block; when the first voting result is the voting results of 2f + 1 replicas, a first consensus rule is adopted; and when the first voting result is the voting results of 3f + 1 replicas, a second consensus rule is adopted.

When the pre-designated consensus protocol type is an f + 1/3f + 1 protocol, voting results supported by the f + 1/3f + 1 protocol includes voting results of f + 1 replicas, voting results of 2f + 1 replicas and voting results of 3f + 1 replicas; when the first voting result is the voting results of f + 1 replicas, a consensus is not performed; when the first voting result is the voting results of 2f + 1 replicas, a third consensus rule is adopted; and when the first voting result is the voting results of 3f + 1 replicas, a second consensus rule is adopted.

As such, compared with the f + 1 protocol and the 3f + 1 protocol, the f + 1/3f + 1 protocol is capable of supporting all three voting thresholds, fully combines the advantages of the f + 1 protocol and the 3f + 1 protocol, and adapting to networks with different speeds, meanwhile has the advantages of improving a throughput of a consensus system, reducing consensus delay and communication complexity.

It should be noted that a first voting result included in a block message of a current new block may be determined by referring to an updated value in the local variable, and a consensus rule is determined based on the first voting result and a pre-designated consensus protocol.

Step 104, tracing voting results of a designated number of parent blocks of the new block based on the consensus rule, and if the voting results of the designated number of parent blocks meet the consensus rule, determining that an earliest prepared parent block in the designated number of parent blocks agrees on a consensus, executing a block commit protocol, and adding the earliest prepared parent block and a block that is on the same branched chain as the earliest prepared parent block and is earlier than the earliest prepared parent block into a blockchain.

Different consensus rules are described in details below.

### ① A first consensus rule

Tracing voting results of three blocks continuous with the new block and prepared earlier than the new block, based on a sequential order on a chain formed by blocks in the form of the parent block link; if all the voting results of three blocks prepared earlier than the new block are the voting results of 2f + 1 replicas, determining that an earliest prepared block in the three blocks prepared earlier than the new block agrees on the consensus.

In this embodiment, the form of a parent block link is that a latter block points to a previous block, the previous block acts as a parent block of the latter block, thereby forming a blockchain by this link.

Referring to FIG. 2, it is a schematic diagram of an f + 1 protocol using a first consensus rule for a consensus. As shown in FIG. 2, there are five blocks b₀, b₁, b₂, b₃ and b₄ on the blockchain. QC₁, QC₁₁ and QC₁₁₁ represent votes of f + 1 replicas, votes of 2f + 1 replicas and votes of 3f + 1 replicas respectively, QC₁ (b₀) represents that a block b₁ message includes a first voting result of the block b₀ and the voting result of the block b₀ is voting results of f + 1 replicas.

When the new block is b₁, the first voting result it includes is voting results of f + 1 replicas, so consensus is not performed in the block b₁.

When the new block is b₄, voting results of three blocks continuous with the block b₄ and prepared earlier than the block b₄ are traced, i.e., voting results of three blocks b₁, b₂, b₃ are traced. As shown in FIG. 2, since the voting results of three blocks b₁, b₂, b₃ are voting results of 2f + 1 replicas, it is determined that the earliest block b1 in the blocks b₁, b₂, b₃ to be on the chain agrees on a consensus, a block Commit protocol is performed, and the earliest prepared parent block b₁ and the block b₀ on the chain earlier than b₁ are added into the blockchain.

### ② A second consensus rule

When the first voting result is voting results of 3f + 1 replicas, determining that a parent block of the new block agrees on a consensus.

Referring to FIG. 3, it is a schematic diagram of a 3f + 1 protocol using a first consensus rule for a consensus. As shown in FIG. 3, when the new block is b₁ and the first voting result of the block b₀ included in its block message is a voting results of 3f + 1 replicas, a consensus is agreed, the block b₀ is committed and added into the blockchain.

When the new block is the block b₄, a consensus is agreed based on the first consensus rule, the voting results of three blocks b₁, b₂, b₃ are traced forward and are the voting results of 2f + 1 replicas, thus a consensus is agreed, the block b₁ is committed (the block b₀ has been added into the blockchain).

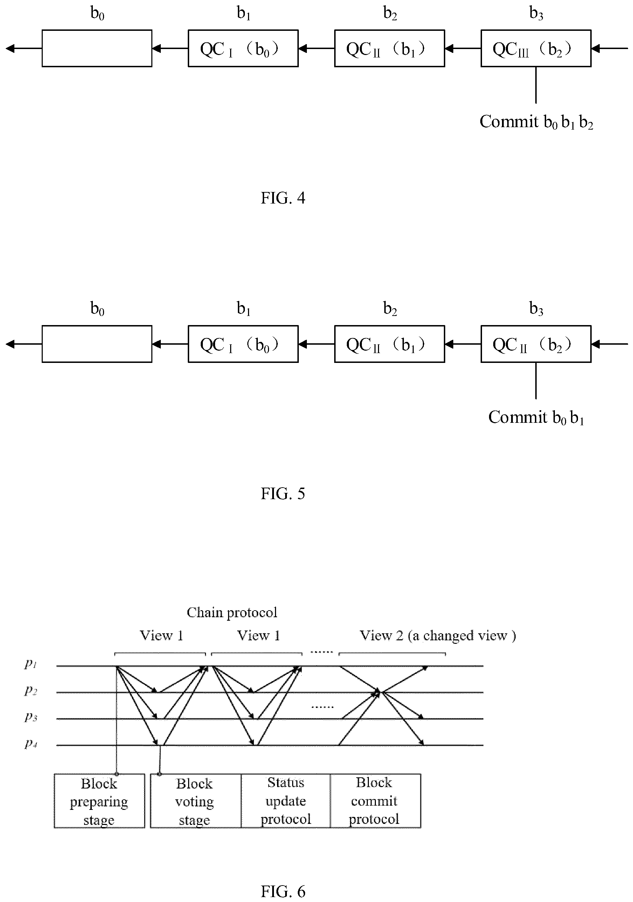

Referring to FIG. 4, it is a schematic diagram of an f + 1/3f + 1 protocol using a second consensus rule for a consensus. As shown in FIG. 4, when the new block is the block b₃ and the voting result of its parent block b₂ is voting results of 3f + 1 replicas, thus a consensus is agreed, and the blocks b₀, b₁, b₂ are committed.

### ③ A third consensus rule

Tracing voting results of two blocks continuous with the new block and prepared earlier than the new block, based on a sequential order on a chain formed by blocks in the form of a parent block link; if all the voting results of two blocks prepared earlier than the new block are the voting results of 2f + 1 replicas, determining that an earliest prepared block in the two blocks prepared earlier than the new block agrees on a consensus.

As shown in FIG. 5, it is a schematic diagram of an f + 1/3f + 1 protocol using a third consensus rule for a consensus. Referring to FIG. 5, when the new block is the block b₃ and the voting results of two blocks b₁, b₂ prepared earlier than the block b₃ are a voting results of 2f + 1 replicas, it is determined that a consensus is agreed, and the blocks b₀, b₁ are committed.

In each view, a leader constantly prepares new blocks and performs a consensus, and view changing occurs when a preset view changing condition is met. Exemplarily, the view changing condition may include the following:
① If a replica starts counting from the time it receives a last message transmitted from a leader, and does not receive any message from the leader after meeting a preset timeout, it is considered that the leader is abnormal, and the view changing condition is met;
② If a replica starts counting from the time when a current view agrees on a consensus for the last time, and no new consensus has been completed after meeting a preset time, it is considered that the view changing condition is met;
③ The maximum number k of blocks as prepared by a leader in each view is preset, after the leader in a current view prepares k blocks, it is considered that the view changing condition is met;
④ A view changing time interval t is preset, time counting starts when entering each view, when meeting the view changing time interval t, it is considered that the view changing condition is met;
After the view changing condition is met, a new-view message is transmitted to a new leader (i.e., a leader of a next view) designated based on a leader election agreement.

When the pre-designated consensus protocol type is a 3f + 1 protocol or an f + 1/3f + 1 protocol, after the new leader receives the new-view messages of 2f + 1 replicas, a view changing consensus is agreed, and a block message broadcasted by the new leader is received, and a block type included in the first block message broadcasted by the new leader is the first block prepared by the new leader after a view is changed.

As shown in FIG. 6, it is a schematic diagram of performing view changing, in view 1, the leader is a replica p₁, the replica p₁ broadcast to the whole network after a new block is prepared in a block preparing stage. After a replica p₂, a replica p₃ and a replica p₄ receive a block message of the new block, entering a block voting stage, voting on validity of the new block based on a voting rule, simultaneously updating a local variable based on a status update protocol, simultaneously preforming a consensus based on a consensus protocol, and committing a block based on a block commit protocol after the consensus is agreed. When a view is not changed, the leader replica p₁ constantly prepares blocks and operations such as block consensus according to the above process is performed. After the preset view changing condition is met, other replicas transmit new-view messages to the leader replica p₂ of view 2 to perform view changing.

Through view changing, a leader can be changed timely to avoid a situation that a problem happens to an old leader, the old leader cannot handle a user instruction to prepare a new block after waiting for a long time, which ensures stable running of a consensus.

In general, the embodiments of the present disclosure have the following characteristics and advantages:

### (1) In terms of data type

For different number of votes obtained by blocks, three kinds of rules (f + 1, 2f + 1, 3f + 1) for proving a threshold are provided, and accordingly four different block types are proposed. Meanwhile, a corresponding block and message data structure is designed creatively.

### (2) In terms of protocol details

1. At a block preparing stage, protocols of blocks with different types prepared by a leader for collected messages are designed.
2. At a block voting stage, a processing protocol for verifying validity of different blocks are designed respectively for different blocks.
3. A new replica internal state change protocol is designed.
4. For blocks obtaining different votes, different consensus rules are given; and it is determined that which blocks are committed when different consensus rules are met (i.e., a new block commit protocol).
5. In a stable leader state, a consensus protocol is guaranteed to run quickly, a protocol communication complexity is reduced significantly, and a consensus agreeing time is reduced. In a case where a leader is unstable and there are error nodes, a view can be changed timely based on a view changing condition, a new leader continues to prepare blocks to ensure continuation of a consensus, which can make a consensus system maintain the same stability as a prior art.

### (3) In terms of entirety of the protocol

The embodiments of the present disclosure design a variable threshold protocol on basis of the Hotstuff technology (that is, different consensus protocol types is capable of supporting at least two voting thresholds), design a totally new consensus mechanism, and obtain a chain BFT protocol that supports a variable threshold.

### (4) In terms of modularization

Consensus protocol types with different variable thresholds are designed as one module, and for an existing chain version of any BFT protocol, after plugging and unplugging the protocol module according to the embodiments of the present disclosure, a new protocol with higher efficiency and higher network adaptability can be obtained by only simply modifying an original protocol.

In the embodiments of the present disclosure, when receiving a user instruction, a leader packages a new block and a block message based on a preset block structure and a preset message structure and broadcasts them to a whole network; after a replica receives the block message, the validity of the new block is determined based on a local variable currently saved and a preset voting rule, and when the new block is determined to be valid, a second vote is transmitted to the leader, so that when the leader packages a block message of a next new block, all collected second votes as a first voting result are written into a block message of the next new block; and, the replica is capable of obtaining a first voting result of a parent block of the new block from the block message, the first voting result may be voting results of f + 1 replicas, voting results of 2f + 1 replicas or voting results of 3f + 1 replicas. After that, a consensus rule is determined based on a pre-designated consensus protocol type and the first voting result; voting results of different designated numbers of parent blocks of new blocks are traced based on different consensus rules, and when the voting results of the designated number of parent blocks meet the consensus rule, it is determined that an earliest prepared parent block in the designated number of parent blocks agrees on a consensus, a block commit protocol may be performed, and the earliest prepared parent block and a block that is on the same branched chain as the earliest prepared parent block and is earlier than the earliest prepared parent block are added into a blockchain. As such, compared with the existing cBFT consensus technology in which only 2f + 1 voting results are supported, types of supported voting results are expanded in the embodiments of the present disclosure, and a leader is capable of preparing a new block when receiving voting results of f + 1 replicas, 2f + 1 replicas and 3f + 1 replicas for a parent block of a new block. In a case where a network environment is poor and there are more new messages, leading to too high block packaging frequency, or improper setting of a system timer makes it difficult for a leader to collect 2f + 1 votes within a timed duration, as long as a parent block receives votes of f + 1 replicas, the leader is capable of preparing a new block, which ensures consensus to be carried out continuously, improves a throughput of a consensus system and simultaneously reduces the sensitivity of a protocol to a timer. When a network condition is better, a new block can be prepared after collecting voting results of 3f + 1 replicas for the parent block. Since a blockchain includes 3f + 1 replicas in total, when votes of 3f + 1 replicas are received, it shows that the parent block has been validity recognized by all replicas, and a consensus has been agreed, there is no need to conduct other rounds of consensus authentication, which shortens the time to consensus, greatly reduces communication complexity and time delay of consensus agreement and simultaneously also improves the throughput of the consensus system.

The embodiments of the present disclosure further provide a blockchain replica apparatus, as described in the following embodiment. The principle of solving a problem by the apparatus is similar to that of the blockchain consensus method, thus the implementation of the apparatus can be referred to the implementation of the blockchain consensus method, repetitions will not be repeated here.

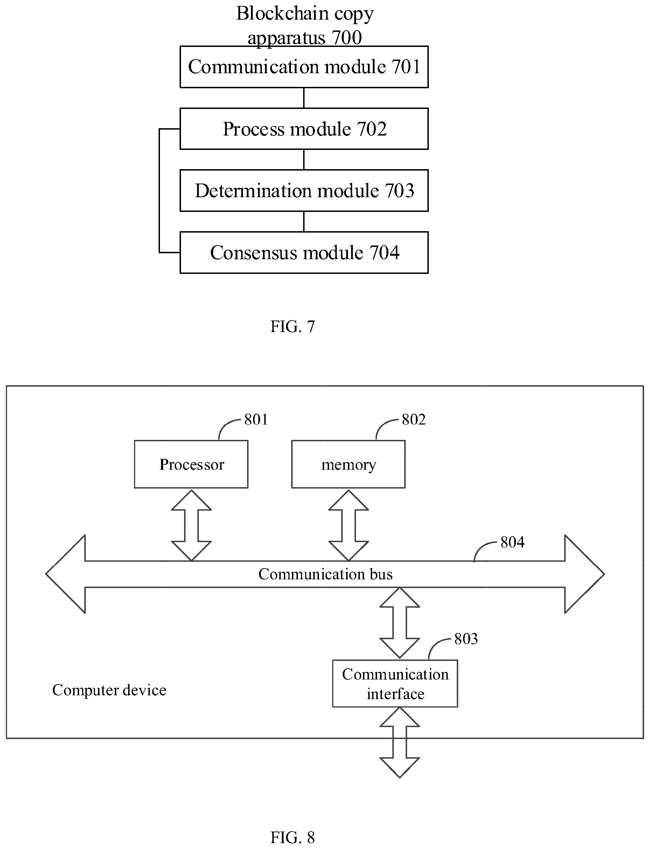

As shown in FIG. 7, the blockchain replica apparatus 700 includes:
a communication module 701, configured to receive a block message broadcasted by a leader, and the block message is packaged by the leader based on a preset message structure after receiving a user instruction, and the block message includes a new block prepared by the leader in response to the user instruction and a first voting result of a parent block of the new block, and the new block is packaged by the leader based on a preset block structure, the new block includes a parent block voting result type of the new block, and the voting result type includes f + 1, 2f + 1, and 3f + 1;
a process module 702, configured to determine validity of the new block based on a local variable currently saved and a preset voting rule, transmit a second vote of the new block to the leader when it is determined that the new block is valid, and simultaneously update the local variable based on the block message, and the local variable includes a latest voting block of blocks, a latest voting evidence and a latest weak voting evidence, and update the latest voting block of blocks to a new block included in the block message; when the first voting result includes votes of 2f + 1 replicas or 3f + 1 replicas, update the latest vote evidence to the first voting result; when the first voting result includes votes of f + 1 replicas, update the latest weak voting evidence to the first voting result; and collect, by the leader, the second vote of the new block as transmitted by each replica, and take all second votes obtained by collecting as the first voting result included in a block message of a next new block in which a current block is a parent block;
a determination module 703, configured to determine a consensus rule based on the first voting result and a pre-designated consensus protocol type; and
a consensus module 704, configured to trace voting results of a designated number of parent blocks of the new block based on the consensus rule, and if the voting results of the designated number of parent blocks meet the consensus rule, determine that an earliest prepared parent block in the designated number of parent blocks agrees on a consensus, execute a block commit protocol, and add the earliest prepared parent block and a block that is on the same branched chain as the earliest prepared parent block and is earlier than the earliest prepared parent block into a blockchain.

In an implementation of the embodiments of the present disclosure, the preset block structure includes a block type, a user request, a parent block link, a block height and block auxiliary data, the block type includes an f + 1 block type, a 2f + 1 block type, a 3f + 1 block type and a first block prepared by a new leader after a view is changed, the block auxiliary data is configured to store an auxiliary block of a block; the preset message structure includes a type domain for storing a message type, a block domain for storing a block, a justify domain for storing a parent block voting result of the block, and an aux domain for storing auxiliary data of a specific type block, the message type includes a generic message, the specific type block is a block with the f + 1 block type, the aux domain is configured to store a first voting result of an auxiliary block of the specific type block; and when the block is a block with other type other than the f + 1 block type, the aux domain is set to be null.

In an implementation mode of the embodiments of the present disclosure, a determination module is configured to:
when the pre-designated consensus protocol type is an f + 1 protocol, voting results supported by the f + 1 protocol include voting results of f + 1 replicas and voting results of 2f + 1 replicas, and when the first voting result is the voting results of f + 1 replicas, the consensus is not performed; when the first voting result is the voting results of 2f + 1 replicas, the consensus rule is a first consensus rule;
when the pre-designated consensus protocol type is a 3f + 1 protocol, voting results supported by the 3f + 1 protocol includes voting results of 2f + 1 replicas and voting results of 3f + 1 replicas; when the first voting result is the voting results of 2f + 1 replicas, the consensus rule is a first consensus rule; when the first voting results is the voting result of 3f + 1 replicas, the consensus rule is a second consensus rule;
when the pre-designated consensus protocol type is an f + 1/3f + 1 protocol, voting results supported by the f + 1/3f + 1 protocol includes voting results of f + 1 replicas, voting results of 2f + 1 replicas and voting results of 3f + 1 replicas; when the first voting results is the voting result of f + 1 replicas, the consensus is not performed; when the first voting result is the voting results of 2f + 1 replicas, the consensus rule is a third consensus rule; when the first voting result is the voting results of 3f + 1 replicas, the consensus rule is a second consensus rule.

In an implementation mode of the embodiments of the present disclosure, when the consensus rule is the first consensus rule, a consensus module is configured to:
trace voting results of three blocks continuous with the new block and prepared earlier than the new block, based on a sequential order on a chain formed by blocks in the form of a parent block link;
if all the voting results of three blocks prepared earlier than the new block are the voting results of 2f + 1 replicas, determine that an earliest prepared block in the three blocks prepared earlier than the new block agrees on the consensus.

In an implementation mode of the embodiments of the present disclosure, when the consensus rule is the second consensus rule, a consensus module is configured to:
when the first voting result is voting results of 3f + 1 replicas, determine that a parent block of the new block agrees on a consensus.

In an implementation mode of the embodiments of the present disclosure, when the consensus rule is the third consensus rule, a consensus module is configured to:
trace voting results of two blocks continuous with the new block and prepared earlier than the new block, based on a sequential order on a chain formed by blocks in the form of a parent block link;
if all the voting results of two blocks prepared earlier than the new block are the voting results of 2f + 1 replicas, determine that an earliest prepared block in the two blocks prepared earlier than the new block agrees on the consensus.

In an implementation mode of the embodiments of the present disclosure, when the pre-designated consensus protocol type is a 3f + 1 protocol or an f + 1/3f + 1 protocol, the blockchain replica apparatus further includes:
a view jump module, configured to, when a preset view changing condition is met, jump to a next view, and transmitting a new-view message to a new leader designated based on a leader election agreement; and
a communication module, further configured to, after the new leader receives the new-view message of 2f + 1 replicas, agree on a view changing consensus, and receive a block message broadcasted by the new leader, and a block type included in the first block message broadcasted by the new leader is the first block prepared by the new leader after a view is changed.

In the embodiments of the present disclosure, when receiving a user instruction, a leader packages a new block and a block message based on a preset block structure and a preset message structure and broadcasts them to a whole network; after a replica receives the block message, the validity of the new block is determined based on a local variable currently saved and a preset voting rule, and when the new block is determined to be valid, a second vote is transmitted to the leader, so that when the leader packages a block message of a next new block, all the collected second votes as a first voting result are written into a block message of the next new block; and, the replica is capable of obtaining a first voting result of a parent block of the new block from the block message, the first voting result may be voting results of f + 1 replicas, voting results of 2f + 1 replicas or voting results of 3f + 1 replicas. After that, a consensus rule is determined based on a pre-designated consensus protocol type and the first voting result; voting results of different designated numbers of parent blocks of new blocks are traced based on different consensus rules, and when the voting results of the designated number of parent blocks meet the consensus rule, it is determined that an earliest prepared parent block in the designated number of parent blocks agrees on a consensus, a block commit protocol is executed, and the earliest prepared parent block and a block that is on the same branched chain as the earliest prepared parent block and is earlier than the earliest prepared parent block are added into a blockchain. As such, compared with the existing cBFT consensus technology in which only 2f + 1 voting results are supported, types of supported voting results are expanded in the embodiments of the present disclosure, and a leader is capable of preparing a new block when receiving voting results of f + 1 replicas, 2f + 1 replicas and 3f + 1 replicas for a parent block of a new block. In a case where a network environment is poor and there are more new messages, leading to too high block packaging frequency, or improper setting of a system timer makes it difficult for a leader to collect 2f + 1 votes within a timed duration, as long as a parent block receives votes of f + 1 replicas, the leader is capable of preparing a new block, which ensures consensus to be carried out continuously, improves a throughput of a consensus system and simultaneously reduces the sensitivity of a protocol to a timer. When a network condition is better, a new block can be prepared after collecting voting results of 3f + 1 replicas for the parent block. Since a blockchain includes 3f + 1 replicas in total, when votes of 3f + 1 replicas are received, it shows that the parent block has been validity recognized by all replicas, and a consensus has been agreed, there is no need to conduct other rounds of consensus authentication, which shortens the time to consensus, greatly reduces communication complexity and time delay of consensus agreement and simultaneously also improves the throughput of the consensus system.

The embodiments of the present disclosure further provide a computer device, FIG. 8 is a schematic diagram of a computer device in the embodiments of the present disclosure, the computer device is capable of implementing all the steps in the blockchain consensus method according to the above embodiments, and specifically includes the following content:
a processor 801, a memory 802, a communications interface 803 and a communication bus 804;
in which, the processor 801, the memory 802 and the communications interface 803 communicate with each other through the communication bus 804; the communications interface 803 is configured to transmit information between relevant devices;
the processor 801 is configured to call a computer program in the memory 802, and the processor implements the blockchain consensus method according to the above embodiments when executing the computer program.

The embodiments of the present disclosure further provide a computer readable storage medium storing a computer program, and the computer program implements the blockchain consensus method when being executed by a processor.

The embodiments of the present disclosure further provide a computer program product including a computer program, and the computer program implements the blockchain consensus method when being executed by a processor.

Persons skilled in the art should understand that the embodiments of the present disclosure may be provided as methods, systems or computer program products. Therefore, the present disclosure may take the form of full hardware embodiments, full software embodiments, or embodiments combining software and hardware aspects. And, the present disclosure may take the form of a computer program product implemented on one or more computer available storage mediums (including but not limited to disk memory, CD-ROM, optical memory, etc.) in which computer available program codes are contained.

The present disclosure is described by reference to methods, apparatus (systems) according to the embodiments of the present disclosure, and flow charts and/or block diagrams of computer program products. It should be understood that each process and/or block in a flowchart and/or block diagram as well as a combination of processes and/or blocks in a flowchart and/or block diagram may be implemented by computer program instructions. These computer program instructions may be provided to a processor of a general-purpose computer, a special purpose computer, an embedded processor or other programmable data processing device to produce a machine, so that instructions executed by a processor of a computer or other programmable data processing device produce a device for implementing a function specified in one or more flows in a flow chart and/or one or more blocks in a block diagram.

These computer program instructions may also be stored in a computer-readable memory capable of directing a computer or other programmable data processing device to work in a particular manner, so that the instructions stored in such computer-readable memory produce a manufactured item including an instruction device, the instruction device implements a function specified in one or more flows in a flow chart and/or one or more blocks in a block diagram.

These computer program instructions may also be loaded onto a computer or other programmable data processing device, so that a series of operational steps are performed on the computer or other programmable device to produce computer-implemented processing, thus the instructions executed on the computer or other programmable device provide steps of implementing a function specified in one or more flows in a flow chart and/or one or more blocks in a block diagram.

The above embodiments further illustrate the purpose, the technical solution and the advantageous effect of the present disclosure. It should be understood that the above contents are only specific embodiments of the present disclosure and are not used to limit the protection scope of the present disclosure, and any modification, equivalent replacement, improvement, etc. made within the spirit and principle of the present disclosure shall be included in the protection scope of the present disclosure.

## Claims

1. A blockchain consensus method, which is applied to a replica in a blockchain, wherein the method comprises:
receiving a block message broadcasted by a leader, wherein the block message is packaged by the leader based on a preset message structure after receiving a user instruction, and the block message comprises a new block prepared by the leader in response to the user instruction and a first voting result of a parent block of the new block, wherein the new block is packaged by the leader based on a preset block structure, the new block comprises a parent block voting result type of the new block, and the voting result type comprises f + 1, 2f + 1, and 3f + 1;
determining validity of the new block based on a local variable currently saved and a preset voting rule, transmitting a second vote of the new block to the leader when it is determined that the new block is valid, and simultaneously updating the local variable based on the block message, wherein the local variable comprises a latest voting block of blocks, a latest voting evidence and a latest weak voting evidence, and updating the latest voting block of blocks to a new block comprised in the block message; when the first voting result comprises votes of 2f + 1 replicas or 3f + 1 replicas, updating the latest vote evidence to the first voting result; when the first voting result comprises votes of f + 1 replicas, updating the latest weak voting evidence to the first voting result; and collecting, by the leader, the second vote of the new block as transmitted by each replica, and taking all second votes obtained by collecting as the first voting result included in a block message of a next new block in which a current block is a parent block;
determining a consensus rule based on the first voting result and a pre- designated consensus protocol type; and
tracing voting results of a designated number of parent blocks of the new block based on the consensus rule, and if the voting results of the designated number of parent blocks meet the consensus rule, determining that an earliest prepared parent block in the designated number of parent blocks agrees on a consensus, executing a block commit protocol, and adding the earliest prepared parent block and a block that is on the same branched chain as the earliest prepared parent block and is earlier than the earliest prepared parent block into a blockchain.

2. The method according to claim 1, wherein the preset block structure comprises a block type, a user request, a parent block link, a block height and block auxiliary data, the block type comprises an f + 1 block type, a 2f + 1 block type, a 3f + 1 block type and a first block prepared by a new leader after a view is changed, the block auxiliary data is configured to store an auxiliary block of a block; the preset message structure comprises a type domain for storing a message type, a block domain for storing a block, a justify domain for storing a parent block voting result of a block, and an aux domain for storing auxiliary data of a specific type block, the message type comprises a generic message, the specific type block is a block with the f + 1 block type, the aux domain is configured to store a first voting result of an auxiliary block of the specific type block; and when the block is a block with other type other than the f + 1 block type, the aux domain is set to be null.

3. The method according to claim 1, wherein determining a consensus rule based on the first voting result and a pre-designated consensus protocol type comprises:
when the pre-designated consensus protocol type is an f + 1 protocol, voting results supported by the f + 1 protocol comprises voting results of f + 1 replicas and voting results of 2f + 1 replicas, and when the first voting result is the voting results of f + 1 replicas, the consensus is not performed; when the first voting result is the voting results of 2f + 1 replicas, the consensus rule is a first consensus rule;
when the pre-designated consensus protocol type is a 3f + 1 protocol, voting results supported by the 3f + 1 protocol comprises voting results of 2f + 1 replicas and voting results of 3f + 1 replicas; when the first voting result is the voting results of 2f + 1 replicas, the consensus rule is a first consensus rule; when the first voting result is the voting results of 3f + 1 replicas, the consensus rule is a second consensus rule; and
when the pre-designated consensus protocol type is an f + 1/3f + 1 protocol, voting results supported by the f + 1/3f + 1 protocol comprises voting results of f + 1 replicas, voting results of 2f + 1 replicas and voting results of 3f + 1 replicas; when the first voting result is the voting results of f + 1 replicas, the consensus is not performed; when the first voting result is the voting results of 2f + 1 replicas, the consensus rule is a third consensus rule; when the first voting result is the voting results of 3f + 1 replicas, the consensus rule is a second consensus rule.

4. The method according to claim 3, wherein when the consensus rule is a first consensus rule, tracing voting results of a designated number of parent blocks of the new block based on the consensus rule, and if the voting results of the designated number of parent blocks meet the consensus rule, determining that an earliest prepared parent block in the designated number of parent blocks agrees on the consensus, comprises:
tracing voting results of three blocks continuous with the new block and prepared earlier than the new block, based on a sequential order on a chain formed by blocks in the form of a parent block link; and
if all the voting results of three blocks prepared earlier than the new block are the voting results of 2f + 1 replicas, determining that an earliest prepared block in the three blocks prepared earlier than the new block agrees on the consensus.

5. The method according to claim 3, wherein when the consensus rule is a second consensus rule, tracing voting results of a designated number of parent blocks of the new block based on the consensus rule, and if the voting results of the designated number of parent blocks meet the consensus rule, determining that an earliest prepared parent block in the designated number of parent blocks agrees on the consensus, comprises:
when the first voting result is voting results of 3f + 1 replicas, determining that a parent block of the new block agrees on a consensus.

6. The method according to claim 3, wherein when the consensus rule is a third consensus rule, tracing voting results of a designated number of parent blocks of the new block based on the consensus rule, and if the voting results of the designated number of parent blocks meet the consensus rule, determining that an earliest prepared parent block in the designated number of parent blocks agrees on a consensus, comprises:
tracing voting results of two blocks continuous with the new block and prepared earlier than the new block, based on a sequential order on a chain formed by blocks in the form of a parent block link; and
if all the voting results of two blocks prepared earlier than the new block are the voting results of 2f + 1 replicas, determining that an earliest prepared block in the two blocks prepared earlier than the new block agrees on a consensus.

7. The method according to claim 2, wherein when the pre-designated consensus protocol type is a 3f + 1 protocol or an f + 1/3f + 1 protocol, the method further comprises:
when a preset view changing condition is met, jumping to a next view, and transmitting a new-view message to a new leader designated based on a leader election agreement; and
after the new leader receives the new-view messages of 2f + 1 replicas, agreeing on a view changing consensus, and receiving a block message broadcasted by the new leader, wherein a block type included in a first block message broadcasted by the new leader is a first block prepared by the new leader after a view is changed.

8. A blockchain replica apparatus, wherein comprises:
a communication module, configured to receive a block message broadcasted by a leader, wherein the block message is packaged by the leader based on a preset message structure after receiving a user instruction, and the block message comprises a new block prepared by the leader in response to the user instruction and a first voting result of a parent block of the new block, wherein the new block is packaged by the leader based on a preset block structure, the new block comprises a parent block voting result type of the new block, and the voting result type comprises f + 1, 2f + 1, and 3f + 1;
a process module, configured to determine validity of the new block based on a local variable currently saved and a preset voting rule, transmit a second vote of the new block to the leader when it is determined that the new block is valid, and simultaneously update the local variable based on the block message, wherein the local variable comprises a latest voting block of blocks, a latest voting evidence and a latest weak voting evidence, and update the latest voting block of blocks to a new block comprised in the block message; when the first voting result comprises votes of 2f + 1 replicas or 3f + 1 replicas, update the latest vote evidence to the first voting result; when the first voting result comprises votes of f + 1 replicas, update the latest weak voting evidence to the first voting result; and collect, by the leader, the second vote of the new block as transmitted by each replica, and take all second votes obtained by collecting as the first voting result included in a block message of a next new block in which a current block is a parent block;
a determination module, configured to determine a consensus rule based on the first voting result and a pre-designated consensus protocol type; and
a consensus module, configured to trace voting results of a designated number of parent blocks for the new block based on the consensus rule, and if the voting results of the designated number of parent blocks meet the consensus rule, determine that an earliest prepared parent block in the designated number of parent blocks agrees on a consensus, execute a block commit protocol, and add the earliest prepared parent block and a block that is on the same branched chain as the earliest prepared parent block and is earlier than the earliest prepared parent block into a blockchain.

9. A computer device, comprising a memory, a processor and a computer program that is stored on the memory and capable of running on the processor, wherein the processor implements the following blockchain consensus method when executing the computer program:
receiving a block message broadcasted by a leader, wherein the block message is packaged by the leader based on a preset message structure after receiving a user instruction, and the block message comprises a new block prepared by the leader in response to the user instruction and a first voting result of a parent block of the new block, wherein the new block is packaged by the leader based on a preset block structure, the new block comprises a parent block voting result type of the new block, and the voting result type comprises f + 1, 2f + 1, and 3f + 1;
determining validity of the new block based on a local variable currently saved and a preset voting rule, transmitting a second vote of the new block to the leader when it is determined that the new block is valid, and simultaneously updating the local variable based on the block message, wherein the local variable comprises a latest voting block of blocks, a latest voting evidence and a latest weak voting evidence, and updating the latest voting block of blocks to a new block comprised in the block message; when the first voting result comprises votes of 2f + 1 replicas or 3f + 1 replicas, updating the latest vote evidence to the first voting result; when the first voting result comprises votes of f + 1 replicas, updating the latest weak voting evidence to the first voting result; and collecting, by the leader, the second vote of the new block as transmitted by each replica, and taking all second votes obtained by collecting as the first voting result included in a block message of a next new block in which a current block is a parent block;
determining a consensus rule based on the first voting result and a pre- designated consensus protocol type; and
tracing voting results of a designated number of parent blocks of the new block based on the consensus rule, and if the voting results of the designated number of parent blocks meet the consensus rule, determining that an earliest prepared parent block in the designated number of parent blocks agrees on a consensus, executing a block commit protocol, and adding the earliest prepared parent block and a block that is on the same branched chain as the earliest prepared parent block and is earlier than the earliest prepared parent block into a blockchain.

10. A computer readable storage medium, storing a computer program, and the computer program implements the following blockchain consensus method when being executed by a processor:
receiving a block message broadcasted by a leader, wherein the block message is packaged by the leader based on a preset message structure after receiving a user instruction, and the block message comprises a new block prepared by the leader in response to the user instruction and a first voting result of a parent block of the new block, wherein the new block is packaged by the leader based on a preset block structure, the new block comprises a parent block voting result type of the new block, and the voting result type comprises f + 1, 2f + 1, and 3f + 1;
determining validity of the new block based on a local variable currently saved and a preset voting rule, transmitting a second vote of the new block to the leader when it is determined that the new block is valid, and simultaneously updating the local variable based on the block message, wherein the local variable comprises a latest voting block of blocks, a latest voting evidence and a latest weak voting evidence, and updating the latest voting block of blocks to a new block comprised in the block message; when the first voting result comprises votes of 2f + 1 replicas or 3f + 1 replicas, updating the latest vote evidence to the first voting result; when the first voting result comprises votes of f + 1 replicas, updating the latest weak voting evidence to the first voting result; and collecting, by the leader, the second vote of the new block as transmitted by each replica, and taking all second votes obtained by collecting as the first voting result included in a block message of a next new block in which a current block is a parent block;
determining a consensus rule based on the first voting result and a pre- designated consensus protocol type; and
tracing voting results of a designated number of parent blocks of the new block based on the consensus rule, and if the voting results of the designated number of parent blocks meet the consensus rule, determining that an earliest prepared parent block in the designated number of parent blocks agrees on a consensus, executing a block commit protocol, and adding the earliest prepared parent block and a block that is on the same branched chain as the earliest prepared parent block and is earlier than the earliest prepared parent block into a blockchain.
